# FASCICULE DE BREVET EUROPEEN

(11) **EP 1 177 034 B1**
(45) Date de publication et mention de la délivrance du brevet: **13.08.2003**
(21) Numéro de dépôt: 00925392.3
(22) Date de dépôt: 04.05.2000
(51) Int. Cl.: B01D 53/94, B01J 35/00, B01J 23/34, B01J 23/656

(54) **COMPOSITION D'EPURATION AVEC TRAITEMENT DES NOx DES GAZ D'ECHAPPEMENT D'UN MOTEUR A COMBUSTION INTERNE**
REINIGUNGSZUSAMMENSETZUNG FÜR NOX ENTHALTENDE ABGASE EINER BRENNKRAFTMASCHINE
PURIFYING COMPOSITION FOR NOX TREATMENT OF EXHAUST GASES OF AN INTERNAL COMBUSTION ENGINE

(30) Priorité: 07.05.1999 FR 9905869
(43) Date de publication de la demande: 06.02.2002
(73) Titulaire: RHODIA CHIMIE, 92512 Boulogne Billancourt Cedex (FR); Faurecia Systèmes d'Echappement, 92100 Boulogne (FR); Renault s.a.s., 92100 Boulogne Billancourt (FR)
(72) Inventeur: BOULY, Christophe, F-25700 Valentigney (FR); PONTIER, Thierry, F-17000 La Rochelle (FR); SARDA, Christian, F-25230 Dasle (FR); BIRCHEM, Thierry, F-75116 Paris (FR); HEDOUIN, Catherine, F-60270 Gouvieux (FR); SEGUELONG, Thierry, F-92800 Puteaux (FR); MORAL, Najat, F-91240 Saint-Michel-sur-Orge (FR); GUYON, Marc, F-91290 Arpajon (FR); BERT, Christian, F-91360 Epinay-sur-Orge (FR)
(74) Mandataire: Blot, Philippe Robert Emile
(86) Numéro de dépôt international: FR0001208
(87) Numéro de publication internationale: WO00067883

(56) Documents cités:
- EP-A- 0 613 714
- EP-A- 0 764 460
- DE-A- 4 403 367
- DE-A- 19 724 545
- FR-A- 2 738 756
- PATENT ABSTRACTS OF JAPAN vol. 1999, no. 09, 30 juillet 1999 (1999-07-30) & JP 11 114424 A (ISUZU CERAMICS RES INST CO LTD), 27 avril 1999 (1999-04-27)

## Description

La présente intention concerne les compositions de traitement de gaz d'échappement de moteurs à combustion interne.

Dans les systèmes d'échappement de véhicules automobiles, on utilise des catalyseurs pour convertir le monoxyde de carbone, les hydrocarbures et les oxydes d'azote NOₓ produits au cours du fonctionnement du moteur, en gaz mieux acceptables pour l'environnement.

Lorsque le moteur fonctionne avec un rapport air/combustible stoechiométrique ou légèrement riche, c'est-à-dire entre environ 14,7 et 14,4 des catalyseurs contenant du palladium, du platine et du rhodium ou des mélanges ou alliages de ces métaux sont capables de convertir efficacement les trois familles de gaz simultanément.

De tels catalyseurs sont souvent appelés catalyseurs trois voies.

Pour permettre de réaliser des économies de combustible, il est cependant souhaitable de faire fonctionner les moteurs dans des conditions de combustion pauvre dans lesquelles le rapport air/combustible est supérieur à 14,7 et généralement compris entre 19 et 27.

Les catalyseurs trois voies sont capables de convertir le monoxyde de carbone et les hydrocarbures mais ne sont pas efficaces pour la réduction des NOₓ produits pendant un fonctionnement à combustion pauvre.

En effet, les catalyseurs à trois voies traditionnels requièrent des proportions très strictes entre les agents oxydants et les agents réducteurs et ne peuvent donc traiter par conversions catalytiques les NOₓ des gaz d'échappement lorsque ces derniers présentent un excès d'oxygène.

Pour résoudre ce problème, on a développé des dispositifs d'épuration des gaz d'échappement comportant des pièges à NOₓ. Le principe de ces dispositifs, notamment celui décrit dans le brevet EP-560 991, est d'absorber les NOₓ produits lors du fonctionnement du moteur en mélange pauvre. Des dispositifs similaires sont décrits dans EP-A-0 613 714 et PATENT ABSTRACT OF JAPAN vol. 1939, n°09.

Cette absorption des NOₓ est obtenue en faisant traverser un monolithe imprégné de substances absorptrices par le flux des gaz d'échappement s'échappant des chambres de combustion. Ces substances sont principalement formées d'éléments alcalins ou alcalino-terreux et de catalyseurs d'oxydation. Les oxydes d'azote NOₓ, préalablement oxydes en NO₂ par des catalyseurs appropriés tels que le platine, sont absorbés à la surface des éléments alcalins ou alcalino-terreux par formation de nitrates.

La capacité et la durée de stockage sont forcément limitées, ce qui impose d'effectuer périodiquement des régénérations, couramment appelées purges. Elles ont pour double objectif de libérer les NOₓ ainsi piégés et de réduire les oxydes d'azote en composés non polluants (azote).

Cette étape de purge se déroule grâce à une stratégie moteur adaptée permettant de générer un milieu à faible teneur en oxygène et contenant des quantités importantes d'agents réducteurs (CO, H₂ ou HC). La réduction des NOₓ est alors assurée par l'ajout d'une fonction réductrice, souvent à base de platine ou de rhodium, sur le monolithe.

On sait que certains matériaux alcalins tels que le baryum, le potassium ou le strontium en combinaison avec du platine sont capables d'emmagasiner ou d'absorber des oxydes d'azote dans des conditions d'excès d'oxygène.

Ces pièges à NOₓ sont particulièrement intéressants en raison de leur capacité d'éliminer les NOₓ des gaz d'échappement de moteurs à combustion pauvre.

De tels systèmes d'épuration des gaz d'échappement, s'ils permettent bien d'obtenir des efficacités compatibles avec les niveaux nécessaires pour atteindre les normes législatives, par un fonctionnement adapté des alternances entre les phases d'absorption et les phases dites de régénération, présentent un certain nombre d'inconvénients.

Il est apparu que les pièges à NOₓ actuellement connus présentent un certain nombre d'inconvénients. Ils requièrent des niveaux élevés de métaux précieux puisque ces métaux précieux participent à la fois aux réactions de stockage des NOₓ et à leur réduction. Ils sont donc très chers à fabriquer.

Par ailleurs, les pièges à NOₓ actuels sont très sensibles à un empoisonnement par le soufre (issu du soufre initialement présent dans le carburant). En effet, les oxydes de soufre se substituent du fait de la présence des catalyseurs d'oxydation, par un procédé très similaire à celui responsable de la formation de nitrates, aux oxydes de NOₓ à la surface des éléments alcalins et alcalino-terreux. L'activité de piégeage diminue alors graduellement au cours du temps et il est nécessaire de développer des stratégies de purge du soufre, stratégies fortement consommatrices d'agents réducteurs et en particulier de carburant.

On a donc mis au point des pièges à NOₓ comprenant un support poreux et des catalyseurs comprenant le manganèse et le potassium.

Le support poreux peut être réalisé en alumine, en un oxyde de cérium, en un oxyde de zirconium, ou en zéolite.

On a déjà prévu d'associer un piège à NOₓ du type décrit ci-dessus. un catalyseur trois voies placé dans une ligne d'échappement en amont du piège à NOₓ.

Dans un tel agencement, le catalyseur trois voies étant monté près du moteur, chauffe rapidement et assure une conversion efficace des émissions en démarrage à froid.

Ensuite, lorsque le moteur est chaud, le catalyseur trois voies élimine les hydrocarbures, le monoxyde de carbone et les oxydes d'azote des gaz d'échappement pendant le fonctionnement stoechiométrique et les hydrocarbures et le monoxyde de carbone pendant le fonctionnement à combustion pauvre.

Le piège à NOₓ placé en aval du catalyseur trois voies intervient lorsque la température des gaz d'échappement lui permet d'atteindre une efficacité maximale.

On a également envisagé de placer un catalyseur trois voies en aval du piège à NOₓ.

Le fait de placer dans une ligne d'échappement un piège à NOₓ et un catalyseur trois voies en amont et/ou en aval de celui-ci, nécessite pour ces composés des conditionnements à inclure dans une ligne d'échappement de façon séparée, ce qui accroît l'encombrement du système et par conséquent son prix de revient.

L'invention vise à créer une composition de traitement des gaz d'échappement d'un moteur à combustion interne qui tout en étant d'une efficacité accrue par rapport aux compostions connues soit d'un prix de revient réduit en particulier en ce qui concerne son conditionnement en vue de son incorporation dans une ligne d'échappement d'un véhicule automobile.

Elle a donc pour objet une composition d'épuration selon la revendication 1. Les compositions peuvent comprendre l'une quelconque des caractéristiques qui sont l'objet des revendications dependantes.

L'invention sera mieux comprise à la lecture de la- description qui va suivre.

D'autres caractéristiques, détails et avantages de l'invention apparaîtront encore plus complètement à la lecture de la description qui va suivre.

Pour l'ensemble de la description, on entend par terres rares les éléments du groupe constitué par l'Yttrium et les éléments de la classification périodique de numéro atomique compris inclusivement entre 57 et 71.

Par ailleurs, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Les moyens absorbant les NOₓ pour moteur à combustion pauvre, se caractérisent par l'association de deux compositions spécifiques qui vont maintenant être décrites plus en détail.

Ces compositions comprennent un support et une phase active. Le terme support doit être pris dans un sens large pour désigner, dans la composition, le ou les éléments majoritaires et/ou soit sans activité catalytique ni activité de piégeage propre, soit présentant une activité catalytique ou de piégeage non équivalente à celle de la phase active; et sur lequel ou sur lesquels sont déposés les autres éléments. Pour simplifier, on parlera dans la suite de la description de support et de phase active ou supportée mais on comprendra que l'on ne sortirait pas du cadre de la présente invention dans le cas où un élément décrit comme appartenant à la phase active ou supportée était présent dans le support, par exemple en y ayant été introduit lors de la préparation même du support.

La première composition est décrite ci-dessous.

Cette composition comprend une phase active qui est à base de manganèse et d'au moins un autre élément A choisi parmi les alcalins et les alcalino-terreux. Comme élément alcalin, on peut citer plus particulièrement le sodium et le potassium. Comme élément alcalino-terreux, on peut mentionner notamment le baryum. Comme la composition peut comprendre un ou plusieurs éléments A, toute référence dans la suite de la description à l'élément A devra donc être comprise comme pouvant s'appliquer aussi au cas où il y aurait plusieurs éléments A.

Par ailleurs, les éléments manganèse et A sont présents dans cette première composition sous une forme chimiquement liée. On entend par là qu'il y a des liaisons chimiques entre le manganèse et l'élément A résultant d'une réaction entre eux, ces deux éléments n'étant pas simplement juxtaposés comme dans un simple mélange. Ainsi, les éléments manganèse et A peuvent être présents sous la forme d'un composé ou d'une phase de type oxyde mixte.

Ce composé ou cette phase peuvent notamment être représentés par la formule AxMnyo2∼ (1 ) dans laquelle 0,5<y/x<6. Comme phase ou composé de formule (1) on peut citer à titre d'exemple ceux du type vernadite, hollandite, romanéchite ou psilomélane, birnessite, todorokite, buserite ou lithiophorite. Le composé peut être éventuellement hydraté. Le composé peut par ailleurs avoir une structure lamellaire de type Cdl2. La formule (1) est donnée ici à titre illustratif, on ne sortirait pas du cadre de la présente invention si le composé présentait une formule différente dans la mesure bien entendu où le manganèse et l'élément A seraient bien chimiquement liés.

L'analyse par RX ou par microscopie électronique permet de mettre en évidence la présence d'un tel composé.

Le degré d'oxydation du manganèse peut varier entre 2 et 7 et, plus particulièrement entre 3 et 7.

Dans le cas du potassium, cet élément et le manganèse peuvent être présents sous la forme d'un composé de type K2Mn4Og. Dans le cas du baryum, il peut s'agir d'un composé de type BaMnO3.

La première compositions comprend en outre un support. Comme support, on peut mettre en oeuvre tout support poreux utilisable dans le domaine de la catalyse. Il est préférable que ce support présente une inertie chimique vis à vis des éléments manganèse et A suffisante pour éviter une réaction substantielle d'un ou de ces éléments avec le support qui serait susceptible de gêner la création d'une liaison chimique entre le manganèse et l'élément A.

Toutefois, dans le cas d'une réaction entre le support et ces éléments, il est possible de mettre en oeuvre des quantités plus importantes de manganèse et d'élément A pour obtenir la liaison chimique recherchée entre ces éléments.

Plus particulièrement, le support est à base d'un oxyde choisi parmi l'oxyde de cérium, l'oxyde de zirconium ou leurs mélanges.

On peut mentionner notamment pour les mélanges d'oxyde de cérium et d'oxyde de zirconium ceux décrits dans les demandes de brevets EP-A-605274 et EP-A735984 dont l'enseignement est incorporé ici. On peut plus particulièrement utiliser les supports à base d'oxyde de cérium et de zirconium dans lesquels ces oxydes sont présents dans une proportion atomique cérium/zirconium d'au moins 1.

Pour ces mêmes supports, on peut aussi utiliser ceux qui se présentent sous forme d'une solution solide. Dans ce cas, les spectres en diffraction X du support révèlent au sein de ce dernier l'existence d'une seule phase homogène. Pour les supports les plus riches en cérium, cette phase correspond en fait à celle d'un oxyde cérique CeO2 cubique cristallisé et dont les paramètres de mailles sont plus ou moins décalés par rapport à un oxyde cérique pur, traduisant ainsi l'incorporation du zirconium dans le réseau cristallin de l'oxyde de cérium, et donc l'obtention d'une solution solide vraie.

On peut encore mentionner pour les mélanges d'oxyde de cérium et d'oxyde de zirconium à base de ces deux oxydes et en outre d'oxyde de scandium ou d'une terre rare autre que le cérium, et notamment ceux décrits dans la demande de brevet WO 97/43214 dont l'enseignement est incorporé ici. Cette demande décrit en particulier des compositions à base d'un oxyde de cérium, d'un oxyde de zirconium et d'un oxyde d'yttrium, ou encore, outre l'oxyde de cérium et l'oxyde de zirconium à base d'au moins un autre oxyde choisi parmi l'oxyde de scandium et les oxydes de terres rares à l'exception du cérium, dans une proportion atomique cérium/zirconium d'au moins 1.

Ces compositions présentent une surface spécifique après calcination 6 heures à 900°C d'au moins 35m2/g et une capacité de stockage de l'oxygène à 400°C d'au moins 1,5ml d.o2lg.

Selon un mode de réalisation particulier de l'invention, le support est à base d'oxyde de cérium et il comprend en outre de la silice. Des supports de ce type sont décrits dans les demandes de brevets EP-A-207857 et EP-A-547924 dont l'enseignement est incorporé ici.

La teneur totale en manganèse, alcalin, et alcalino-terreux peut varier dans de larges proportions. La teneur minimale est celle en deçà de laquelle on n'observe plus d'activité d'adsorption des NOx. Cette teneur peut être comprise notamment entre 2 et 50%, plus particulièrement entre 5 et 30%, cette teneur étant exprimée en % atomique par rapport à la somme des moles d'oxyde(s) du support et des éléments concernés de la phase active.

Les teneurs respectives en manganèse, alcalin, et alcalino-terreux peuvent aussi varier dans de larges proportions, la teneur en manganèse peut être notamment égale à, ou proche de celle en alcalin ou alcalino-terreux.

On peut préparer la première composition du composé de l'invention par un procédé dans lequel on met en contact le support avec le manganèse et au moins un autre élément A ou avec des précurseurs du manganèse et d'au moins un autre élément A et où on calcine l'ensemble à une température suffisante pour créer une liaison chimique entre le manganèse et l'élément A.

Une méthode utilisable pour la mise en contact précisée est l'imprégnation. On forme ainsi tout d'abord une solution ou une barbotine de sels ou de composés des éléments de la phase supportée.

A titre de sels, on peut choisir les sels d'acides inorganiques comme les nitrates, les sulfates ou les chlorures.

On peut aussi utiliser les sels d'acides organiques et notamment les sels d'acides carboxyliques aliphatiques saturés ou les sels d'acides hydroxycarboxyliques. A titre d'exemples, on peut citer les formiates, acétates, propionates, oxalates ou les citrates.

On imprègne ensuite le support avec la solution ou la barbotine.

On utilise plus particulièrement l'imprégnation à sec. L'imprégnation à sec consiste à ajouter au produit à imprégner un volume d'une solution aqueuse de l'élément qui est égal au volume poreux du solide à imprégner.

Il peut être avantageux d'effectuer le dépôt des éléments de la phase active en deux étapes. Ainsi, on peut avantageusement déposer le manganèse dans un premier temps puis l'élément A dans un deuxième.

Après imprégnation, le support est éventuellement séché puis il est calciné. Il est à noter qu'il est possible d'utiliser un support qui n'a pas encore été calciné préalablement à l'imprégnation.

Le dépôt de la phase active peut aussi se faire par atomisation d'une suspension à base de sels ou de composés des éléments de la phase active et du support. On calcine ensuite le produit atomisé ainsi obtenu.

La calcination se fait, comme indiqué plus haut, à une température suffisante pour créer une liaison chimique entre le manganèse et l'élément A.

Cette température varie suivant la nature de l'élément A mais, dans le cas d'une calcination sous air, elle est généralement d'au moins 600°C plus particulièrement d'au moins 700°C, elle peut être notamment comprise entre 800°C et 850°C.

Des températures supérieures ne sont généralement pas nécessaires dans la mesure où la liaison chimique entre le manganèse et l'élément A est déjà formée mais par contre elles peuvent entraîner une diminution de la surface spécifique du support susceptible de diminuer les propriétés catalytiques de la composition.

La durée de la calcination dépend notamment de la température et elle est fixée aussi de manière à être suffisante pour créer une liaison chimique des éléments.

La seconde composition du composé de l'invention va maintenant être décrite.

Cette composition comporte aussi un support et une phase active.

Ce qui a été dit plus haut au sujet de la phase active de la première composition s'applique aussi ici, notamment en ce qui concerne la nature des éléments de cette phase et leur quantité. Ainsi, l'élément B peut être plus particulièrement le sodium, le potassium ou le baryum.

La phase active de la seconde composition peut être aussi à basé de manganèse et d'au moins une terre rare. Cette terre rare peut être plus particulièrement choisie parmi le cérium, le terbium, le gadolinium, le samarium, le néodyme et le praséodyme.

La teneur totale en manganèse, alcalin, alcalino-terreux ou en terre rare peut varier entre 1 et 50%, plus particulièrement entre 5 et 30%. Cette teneur est exprimée en % atomique par rapport à la somme des moles d'oxyde(s) du support et des éléments concernés de la phase supportée. Les teneurs respectives en manganèse, alcalin, alcalino-terreux ou en terres rares peuvent aussi varier dans de larges proportions, la teneur en manganèse peut être notamment égale à, ou proche de celle en élément B.

Comme indiqué plus haut, une caractéristique de la seconde composition est qu'elle présente ou est susceptible de présenter une surface spécifique d'au moins 80m²/g après calcination 8 heures à 800°C. Plus particulièrement, cette surface spécifique est d'au moins 100m²/g après calcination 8 heures à 800°C.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Cette caractéristique de surface est obtenue par le choix d'un support convenable, présentant notamment une surface spécifique suffisamment élevée.

Ce support peut être à base d'alumine. On peut utiliser ici tout type d'alumine susceptible de présenter une surface spécifique suffisante pour une application en catalyse. On peut mentionner les alumines issues de la déshydratation rapide d'au moins un hydroxyde d'aluminium, tel que la bayerite, l'hydrargillite ou gibbsite, la nordstrandite, e/ou d'au moins un oxyhydroxyde d'aluminium tel que la boehmite, la pseudoboehmite et le diaspore.

Selon un mode de réalisation particulier de l'invention, on utilise une alumine stabilisée. Comme élément stabilisant on peut citer les terres rares, le baryum, le silicium et le zirconium. Comme terre rare on peut mentionner tout particulièrement le cérium, le lanthane ou le mélange lanthane-néodyme.

La préparation de l'alumine stabilisée se fait d'une manière connue en soi, notamment par imprégnation de l'alumine par des solutions de sels, comme les nitrates, des éléments stabilisants précisés ou encore par coséchage d'un précurseur d'alumine et de sels de ces éléments puis calcination.

On peut citer par ailleurs une autre préparation de l'alumine stabilisée dans laquelle la poudre d'alumine issue de la déshydratation rapide d'un hydroxyde ou d'un oxyhydroxyde d'aluminium est soumise à une opération de mûrissement en présence d'un agent stabilisant constitué par un composé du lanthane et, éventuellement, un composé du néodyme, ce composé pouvant être plus particulièrement un sel.

Le mûrissement peut se faire par mise en suspension de l'alumine dans l'eau puis chauffage à une température comprise par exemple entre 70 et 110°C. Après le mûrissement, l'alumine est soumise à un traitement thermique.

Une autre préparation consiste en un type de traitement similaire mais avec le baryum.

La teneur en stabilisant exprimée en poids d'oxyde de stabilisant par rapport à l'alumine stabilisée est comprise généralement entre 1,5 et 15%, plus particulièrement entre 2,5 et 11%.

Le support peut aussi être à base de silice.

Il peut aussi être à base de silice et d'oxyde de titane dans une proportion atomique Ti/Ti+Si comprise entre 0,1 et 15%. Cette proportion peut être plus particulièrement comprise entre 0,1 et 10%. Un tel support est décrit notamment dans la demande de brevet WO 99/01216 dont l'enseignement est incorporé ici.

Comme autre support convenable, on peut utiliser ceux à base d'oxyde de cérium et d'oxyde de zirconium, ces oxydes pouvant se présenter sous la forme d'un oxyde mixte ou d'une solution solide de l'oxyde de zirconium dans l'oxyde de cérium ou réciproquement. Ces supports sont obtenus par un premier type de procédé qui comprend une étape dans laquelle on forme un mélange comprenant de l'oxyde de zirconium et de l'oxyde de cérium et on lave ou on imprègne le mélange ainsi formé par un composé alcoxylé ayant un nombre d'atomes de carbone supérieur à 2. Le mélange imprégné est ensuite calciné.

Le composé alcoxylé peut être choisi notamment parmi les produits de formule (2) R1-((CH2)x-O)n-R2 dans laquelle R1 et R2 représentent des groupes alkyles linéaires ou non, ou H ou OH ou Cl ou Br ou I; n est un nombre compris entre 1 et 100; et x est un nombre compris entre 1 et 4, ou encore ceux de formule (3) (R3,R4)-⌀-((CH2)ₓ-o)n-OH dans laquelle ⌀ désigne un cycle benzénique, R3 et R4 sont des substituants identiques ou différents de ce cycle et représentent l'hydrogène ou des groupes alkyles linéaires ou non ayant de 1 à 20 atomes de carbone, x et n étant définis comme précédemment; ou encore ceux de formule (4) R4O-((CH2)ₓ-O)n-H où R4 représente un groupe alcool linéaire ou non, ayant de 1 à 20 atomes de carbone; x et n étant définis comme précédemment; et ceux de formule (5) R5-S-((CH2)ₓ-O)n-H où R5 représente un groupe alkyle linéaire ou non ayant de 1 à 20 atomes de carbone, x et n étant définis comme précédemment.

On pourra se référer pour ces produits à la demande de brevet WO 98/16472 dont l'enseignement est incorporé ici.

Ces supports peuvent être aussi obtenus par un second type de procédé qui comprend une étape dans laquelle on fait réagir une solution d'un sel de cérium, une solution d'un sel de zirconium et un additif choisi parmi les tensioactifs anioniques, les tensioactifs non ioniques, les polyéthylènes glycols, les acides carboxyliques et leurs sels, la réaction pouvant éventuellement avoir lieu en présence d'une base e/ou d'un agent oxydant.

Comme tensioactifs anioniques on peut utiliser plus particulièrement les carboxylates, les phosphates, les sulfates et les sulfonates. Parmi les tensioactifs non ioniques on peut utiliser de préférence les alkyl phénols éthoxylés et les amines éthoxylées.

La réaction entre les sels de zirconium et de cérium peut se faire en chauffant la solution contenant les sels, il s'agit alors d'une réaction de thermohydrolyse. Elle peut aussi se faire par précipitation en introduisant une base dans la solution contenant les sels.

On pourra se référer pour ces produits à la demande de brevet WO 98/45212 dont l'enseignement est incorporé ici.

La préparation de la seconde composition peut se faire avec les mêmes méthodes que celles qui ont été données plus haut pour la première. On notera qu'après la mise en contact du support avec les éléments de la phase active, on calcine l'ensemble à une température suffisante pour que ces éléments soient présents sous forme d'oxydes. Généralement, cette température est d'au moins 500°C, plus particulièrement d'au moins 600°C.

Le composé de l'invention tel que décrit plus haut se présente sous forme d'une poudre mais il peut éventuellement être mise en forme pour se présenter sous forme de granulés, billes, cylindres ou nids d'abeille de dimensions variables.

L'invention concerne aussi un système, utilisable pour le piégeage des NOₓ, qui comprend un revêtement (washcoat) à propriétés catalytiques et incorporant le composé selon l'invention, ce revêtement étant déposé sur un substrat du type par exemple monolithe métallique ou céramique.

Ce système peut se présenter sous différents modes de réalisation.

Selon un premier mode, le système comprend un substrat et un revêtement constitué par deux couches superposées. Dans ce cas, la première couche contient la première composition du composé et la seconde couche contient la seconde composition.

L'ordre des couches peut être quelconque, c'est à dire que la couche interne en contact avec le substrat peut contenir soit la première soit la seconde composition, la couche externe déposée sur la première contenant alors l'autre composition du composé.

Selon un second mode de réalisation, le composé est présent dans le revêtement sous la forme d'une couche unique qui comprend dans ce cas les deux compositions précisées, sous la forme d'un mélange, obtenu par exemple par mélange mécanique.

Un troisième mode de réalisation est envisageable. Dans ce cas, le système comprend deux substrats juxtaposés, chaque substrat comprenant un revêtement.

Le revêtement du premier substrat contient la première composition et le revêtement du second substrat contient la seconde composition.

L'invention concerne par ailleurs l'utilisation d'un composé tel que décrit plus haut dans la fabrication d'un tel système.

La fonction réductrice et/ou de catalyseur trois voies TWC est composée de la manière suivante.

**Métaux précieux :** Groupe VIII du tableau périodique Pt; Pd et Rh avec des teneurs :
Pt : de 0,03 à 4 g/l, préférentiellement entre 0,3 et 1,9 g/l
Pd : de 0,03 à 5,6 g/l, préférentiellement entre 0,3 et 4 g/l
Rh: de 0,03 à 1,2 g/l, préférentiellement entre 0,07 et 0,6 g/l.

La fonction réductrice et/ou de catalyseur trois voies TWC est optimisée par les associations suivantes sur un même catalyseur : Pt/Rh, Pd/Rh et Pt/Pd/Rh.

Les métaux précieux peuvent être déposés sur le monolithe déjà enduit de support ou "washcoat", ensemble ou successivement et de préférence dans certaines couches, s'il s'agit de technologie multicouches.

Dans ce dernier cas, au moins une couche de support ou "washcoat" peut ne supporter aucun des métaux précieux précités, les autres couches pouvant en supporter entre un et trois avec des teneurs et des proportions différentes.

Ils peuvent aussi être déposés préalablement à l'enduction sur au moins une des poudres du support.

Le même support peut être imprégné de plusieurs métaux précieux, soit séparément (par exemple le premier métal est imprégné sur une fraction du support et le deuxième métal, sur la fraction restante du même support), soit ensemble ou successivement sur la même partie du support.

### Supports : Ils sont de deux types :

Parmi les oxydes réfractaires connus de l'homme de l'art pour ce type d'application, on utilise préférentiellement l'alumine : entre 20 et 250 g/l et de préférence entre 50 et 150 g/l.

L'alumine gamma est utilisée de préférence, mais aussi de l'alumine alpha, delta, etha, kappa et theta peuvent aussi être présentes sur le support avec une surface spécifique de 1 à 300 m²/g et de préférence entre 10 et 200 m²/g.

Cette alumine peut être stabilisée thermiquement par ajout d'un ou de plusieurs dopants tels que les oxydes de métaux alcalino-terreux, de préférence Ba et Sr ou les oxydes de terres rares, de préférence le La et Ce.

La teneur totale de ces dopants est comprise entre 1 et 15% en poids de préférence entre 3 et 10%.

### Constituants de stockage d'oxygène.

La teneur de ces constituants est comprise entre 10 et 200 g/l, de préférence entre 20 et 100 g/l d'oxydes Cérium ou de Ce-Zr préformés pouvant être dopés. Ces oxydes peuvent contenir entre 10 et 90% en poids d'oxyde de Ce et de 10 à 90% d'oxyde de Zr et entre 1 et 20% de dopants. Les dopants possibles sont de préférence des oxydes de terres rares, de préférence La, Pr, Nd, ainsi que l'Ytrium. Plusieurs dopants ou promoteurs peuvent se trouver présents dans le même oxyde de Ce-Zr.

Plusieurs oxydes de Ce-Zr de compositions différentes peuvent se retrouver dans une même technologie et dans le cas d'une technologie multicouche, chaque couche peut en contenir plusieurs, de compositions différentes, aussi bien à l'intérieur d'une même couche qu'entre les différentes couches.

D'autre part, au moins une des couches peut ne pas contenir ce type de composé.

### * Eléments fixateurs de H2S :

La fonction réductrice et/ou de catalyseur trois voies contient 0 à 50 g/l maximum, de préférence entre 10 et 30 g/l de tels éléments fixateurs.

Les oxydes préférés pour cette fonction sont les oxydes de Ni, Cu et Mn et peuvent être utilisés seuls ou en association, tels quels ou déposés sur un ou plusieurs supports précités, mais aussi sur l'oxyde de cerium.

Ces composés peuvent être enduits dans une couche spécifique ne comportant pas de métaux précieux.

La fonction de réduction et/ou de catalyseur trois voies TWC, telle que décrites ci-dessus peut être déposée sous la forme d'une monocouche ou sous forme multicouche sur un substrat.

Le produit piège à NOₓ tel que décrit ci-dessus peut être déposé sous la forme d'une monocouche ou sous forme multicouche sur ce même susbtrat ou alors combiné à la fonction réduction et/ou catalyseur trois voies TWC puis déposé.

Une combinaison de type sandwich de ces deux fonctions est également envisageable. Elle peut être réalisée par dépôt de chacune de ces fonctions sur des supports séparés et assemblage desdits supports par superposition.

Le produit catalyseur trois voies peut être également ajouté à chacune des deux compositions pièges à NOₓ, déposées chacune sur un substrat différent, lesdits substrats pouvant être juxtaposés.

Les deux fonctions piège à NOₓ et réduction et/ou catalyseur trois voies telles que décrites précédemment sont déposées sur le même substrat à canaux parallèles, préférentiellement un substrat en cordiérite dans les proportions suivantes :
- piège à NOₓ de 25 à 500 g/l préférentiellement entre 100 et 300 g/l,
- réduction et/ou catalyseur trois voies de 25 à 300 g/l préférentiellement de 50 à 150 g/l,
- soit une charge totale de 50 à 800 g/l.

L'invention concerne aussi un procédé de traitement de gaz en vue de la réduction des émissions des oxydes d'azote mettant en oeuvre le composé de l'invention.

Les gaz susceptibles d'être traités dans le cadre de la présente invention sont, par exemple, ceux issus de turbines à gaz, de chaudières de centrales thermiques ou encore de moteurs à combustion interne. Dans ce dernier cas, il peut s'agir notamment de moteurs diesel ou de moteurs fonctionnant en mélange pauvre.

Le composé de l'invention fonctionne comme pièges à NOₓ lorsqu'il est mis en contact avec des gaz qui présentent une teneur élevée en oxygène. Par gaz présentant une teneur élevée en oxygène, on entend des gaz présentant un excès d'oxygène par rapport à la quantité nécessaire pour la combustion stoechiométrique des carburants et, plus précisément, des gaz présentant un excès d'oxygène par rapport à la valeur stoechiométrique λ = 1, c'est à dire les gaz pour lesquels la valeur de λ est supérieure à 1.

La valeur λ est corrélée au rapport air/carburant d'une manière connue en soi notamment dans le domaine des moteurs à combustion interne. De tels gaz peuvent être ceux de moteur fonctionnant en mélange pauvre (lean bum) et qui présentent une teneur en oxygène (exprimée en volume) par exemple d'au moins 2% ainsi que ceux qui présentent une teneur en oxygène encore plus élevée, par exemple des gaz de moteurs du type diesel, c'est à dire d'au moins 5% ou de plus de 5%, plus particulièrement d'au moins 10%, cette teneur pouvant par exemple se situer entre 5% et 20%.

### Exemples :

On va donner ci-après des exemples de réalisation d'une formulation présentant des propriétés de piège à Noₓ et de réduction et/ou de catalyseur trois voies TWC.

### Exemple 1:

La fonction piège à Noₓ est constituée d'une composition à base de (K-Mn) supportée sur une composition à base de (Ce-Zr-La) et d'une composition à base de (K-Mn) supportée sur une composition à base de Al 203-Ce, le tout dénommé ci-après piège à NOₓ et enduit sur un substrat à canaux parallèles du type cordiérite avec une charge de 200 g/l.

La fonction de catalyseur trois voies TWC est constituée de la manière suivante :
- dépôt de 0,56% de Rh sur un support d'oxyde de Ce-Zr présentant une structure solide avec 20% de cérium et 80% de zircone et mélangé : charge 25 g/l.
- dépôt de 0,56% de Pd sur un support en Al203 stabilisé par un dopant Ba : charge de 125 g/l.

La formulation suivant l'invention présente donc une composition totale de 350 g/l de phase active sur un substrat céramique en cordiérite, décomposée en 200 g/l de fonction piège à NOₓ et 150 g/l de fonction réduction et/ou de catalyseur trois voies TWC.

La formulation ainsi décrite a été enduite sous la forme d'une monocouche sur ledit substrat en cordiérite avec une charge de phase active de 350 g/l.

Le catalyseur ainsi obtenu est vieilli à 875°C durant 6h sous une composition rédox (CO, O2 et H2O).

Les résultats d'évaluation obtenus lors des tests catalytiques sont les suivants :

### Tests catalytiques des fonctions de catalyseur trois voies TWC

### Test de température d'amorçage

La composition du gaz sur lequel on a procédé au test de température d'amorçage est donnée dans le tableau I.

**TABLEAU I**

| | | | |
|---|---|---|---|
| Composition du gaz testé. Test réalisé par balayage thermique entre 200 et 450°C | | | |

| COMPOSANT | unité | richesse | |
|---|---|---|---|
| | | 0,9800 | 1,0200 |
| CO2 | % | 14 | 14 |
| H2O | % | 10 | 10 |
| CO | % | 0,4 | 1,4 |
| O2 | % | 0,775 | 0,484 |
| C3H6 | ppm | 375 | 375 |
| C3H8 | ppm | 125 | 125 |
| NO | ppm | 950 | 950 |
| N2 | % | 74,68 | 73,97 |
| VVH= 70 000 h⁻¹ | | | |
| vitesse volumique horaire | | | |

### Résultats de tests d'amorçage

| | T° d'amorçage (R=1,02) | | |
|---|---|---|---|
| | CO | HC | NOₓ |
| Piège à NOₓ seul | n(*) | n(*) | n(*) |
| TWC seul 310°C | 310°C | 304°C | 331°C |
| Invention | 294°C | 299°C | 294°C |
| n(*) non mesurable | | | |

### Test de richesse

La composition du gaz sur lequel on a procédé au test de richesse est donnée dans le tableau II.

**TABLEAU II**

| | | |
|---|---|---|
| Composition du gaz testé. | | |
| Test effectué à une température de 465°C. | | |
| Richesse variant entre 1,04 et 0,97. | | |

| COMPOSANT | unité | teneurs |
|---|---|---|
| CO2 | % | 14 |
| H2O | % | 10 |
| CO | % | 1,4 |
| O2 | % | 0,085 à 1,46 |
| C3H6 | ppm | 375 |
| C3H8 | ppm | 125 |
| NO | ppm | 950 |
| N2 | % | 74,37 à 72,995 |
| VVH= 70 000 h⁻¹ | | |
| perturbation fréquence 0,5 Hertz | | |
| amplitude +/-3% | | |

### Résultats

| | % de conversion au point d'isoconversion | | |
|---|---|---|---|
| | CO | HC | NOₓ |
| Piége à NOₓ seul | n(*) | n(*) | n(*) |
| TWC seul | 97,6 | 99,1 | 97,6 |
| Invention | 99,8 | 99,7 | 99,8 |
| n(*) non mesurable | | | |

### Tests catalytiques des fonctions piège à NOₓ :

conditions expérimentales : .. VVh = 70.000 h⁻¹, 10%H20, 500 ppm NO, 10%02, 10% CO2

### Résultats

| | NOₓ piégé en mg/litre de catalyseur en 30 sec. | | | |
|---|---|---|---|---|
| | 300°C | 350°C | 400°C | 450°C |
| Piège à NOₓ seul | 45 | 70 | 68 | 31 |
| TWC seul | n(*) | 9 | 56 | 60 |
| Invention | 78 | 140 | 140 | 104 |
| n(*) non mesurable | | | | |

La composition de traitement des gaz d'échappement suivant l'invention présente vis à vis des compositions connues, les avantages suivants.

La synergie des divers constituants de la composition permet :
- de meilleures performances de la fonction catalyseur trois voies PWC grâce à l'optimisation des produits OSC pour le stockage de l'oxygène contenus dans le piège à NOₓ comme CeO2 de l'exemple ou tout autre produit (Ce-Zr ...) qui élargissent la fenêtre d'activité en balayage et la conversion au point d'isoconversion PI.
- de meilleures performances en capacité de stockage de NOₓ en grammes par litre de catalyseur ainsi que l'élargissement de la fenêtre de température par l'utilisation optimale des métaux précieux contenus dans la fonction de catalyseur trois voies TWC qui favorise la transformation de NO en NO₂ de préférence à basse température.

Du fait de l'augmentation des performances, il est possible de réduire de façon significative le volume catalytique ou le nombre de pots catalytiques.

Elle assure un meilleur traitement des NOₓ (réduction) désorbés par le piège à NOₓ du fait de la proximité de la fonction réduction incorporée qui est déposée sur le même substrat.

## Revendications

1. Composition d'épuration des gaz d'échappement d'un moteur à combustion interne pouvant effectuer la combustion d'un combustible avec des rapports air-combustible pauvres comprenant des moyens absorbant les NOₓ présents dans les gaz d'échappement, en présence d'un excès d'oxygène et qui libèrent les NOₓ absorbés lorsque la concentration en oxygène des gaz d'échappement diminue, **caractérisée en ce que** les moyens absorbant les NOₓ comprennent une association :
- d'une première composition comprenant un support et une phase active, la phase active étant à base de manganèse et d'au moins un autre élément A choisi parmi les alcalins et les alcalino-terreux, le manganèse et l'élément A étant chimiquement liés,
- d'une deuxième composition distincte de la première composition comprenant un support et une phase active à base de manganèse et d'au moins un autre élément B choisi parmi les alcalins, les alcalino-terreux et les terres rares, cette deuxième composition présentant ou étant susceptible de présenter une surface spécifique d'au moins 80 m²/g après une calcination de 8 heures à 800°C, et
- d'une troisième composition de réduction et/ou de catalyseur trois voies est incorporée aux moyens absorbant les NOₓ, cette troisième composition étant distincte des première et seconde compositions.

2. Composition suivant la revendication 1, **caractérisée en ce que** la deuxième composition présente ou est susceptible de présenter une surface spécifique d'au moins 100 m²/g après calcination 8 heures à 800°C.

3. Composition suivant l'une des revendications 1 et 2, **caractérisée en ce que** les éléments A et B sont choisis parmi le potassium, le sodium et le baryum.

4. Composition suivant l'une des revendications 1 à 3, **caractérisée en ce que** le support de la deuxième composition est à base d'alumine ou d'alumine stabilisée par du silicium, du zirconium, du baryum ou une terre rare.

5. Composition suivant l'une quelconque des revendications 1 à 3, **caractérisée en ce que** le support de la deuxième composition est à base de silice.

6. Composition suivant l'une quelconque des revendications 1 à 3, **caractérisée en ce que** le support de la deuxième composition est à base de silice et d'oxyde de titane dans une proportion atomique Ti/Ti+Si comprise entre 0,1 et 15%.

7. Composition suivant l'une quelconque des revendications 1 à 3, **caractérisée en ce que** le support de la deuxième composition est à base d'oxyde de cérium et d'oxyde de zirconium, ce support ayant été obtenu par un procédé dans lequel on forme un mélange comprenant de l'oxyde de zirconium et de l'oxyde de cérium et on lave ou on imprègne le mélange ainsi formé par un composé alcoxylé ayant un nombre d'atomes de carbone supérieur à 2.

8. Composition suivant l'une quelconque des revendications 1 à 3, **caractérisée en ce que** le support de la deuxième composition est à base d'oxyde de cérium et d'oxyde de zirconium, ce support ayant été obtenu par un procédé dans lequel on fait réagir une solution d'un sel de cérium, une solution d'un sel de zirconium et un additif choisi parmi les tensioactifs anioniques, les tensioactifs non ioniques, les polyéthylènes glycols, les acides carboxyliques et leurs sels, la réaction pouvant éventuellement avoir lieu en présence d'une base et/ou d'un agent oxydant.

9. Composition suivant l'une quelconque des revendications précédentes, **caractérisée en ce que** le support de la première composition est à base d'un oxyde choisi parmi l'oxyde de cérium, l'oxyde de zirconium ou leurs mélanges.

10. Composition suivant l'une quelconque des revendications précédentes, **caractérisée en ce que** le support de la première composition est à base d'oxyde de cérium et il comprend en outre de la silice.

11. Composition suivant l'une des revendications 1 à 10, **caractérisée en ce que** la troisième composition de réduction et/ou de catalyseur trois voies est incorporée à la composition absorbant les NOₓ sous une même formulation catalytique.

12. Composition suivant l'une des revendications 1 à 10, **caractérisée en ce que** la troisième composition de réduction et/ou de catalyseur trois voies est incorporée, à la composition absorbant les NOₓ sous différentes formulations catalytiques déposées sur un même substrat.

13. Composition suivant l'une des revendications 1 à 12, **caractérisée en ce que** la troisième composition de réduction et/ou de catalyseur trois voies comprend sur un même catalyseur :
- un ou plusieurs métaux précieux Pt, Pd, Rh,
- des supports, oxydes réfractaires de préférence Al₂O₃ dopé ou non par des éléments alcalino-terreux, de préférence Ba, Sr ou des oxydes de terres rares, et/ou des oxydes de type CeO₂, ZrO₂ ou Ce-Zr préformés pouvant être dopés préférentiellement par des oxydes de terres rares et/ou d'Yttrium et/ou des oxydes stockeurs d'oxygène préférentiellement ZrO₂, CeO₂ ou des oxydes de Ce-Zr préformés pouvant être dopés préférentiellement par des oxydes de terres rares et/ou d'Yttrium, et/ou des éléments fixateurs de H₂S parmi les éléments ou oxydes de Ni, Mn, Cu.

14. Composition suivant l'une quelconque des revendications 1 à 13, **caractérisée en ce que** la troisième composition de réduction et/ou de catalyseur trois voies TWC est déposée sous la forme d'une monocouche ou sous une forme multicouche sur un substrat, tandis que le produit piège à NOₓ est déposé sous la forme d'une monocouche ou sous forme multicouche sur ce même substrat ou bien combiné à la troisième composition de réduction et/ou catalyseur trois voies puis déposé sur ledit substrat.

15. Composition suivant l'une quelconque des revendications 1 à 13, **caractérisée en ce que** la troisième composition de réduction et/ou de catalyseur trois voies et le produit piège à NOₓ forment une combinaison de type sandwich par dépôt sur des supports séparés et assemblage desdits supports par superposition.

16. Composition suivant l'une des revendications 1 à 13, **caractérisée en ce que** la troisième composition de réduction et/ou de catalyseur trois voies et chacune des compositions pièges à NOₓ forment une combinaison.

17. Composition suivant la revendication 16, **caractérisée en ce que** les deux combinaisons sont déposées sur le même substrat.

18. Composition suivant la revendication 16, **caractérisée en ce que** chaque combinaison est déposée sur un substrat séparé, les deux substrats étant ensuite juxtaposés.

## Patentansprüche

1. Zusammensetzung zur Reinigung von Abgasen eines Verbrennungsmotors, der die Verbrennung eines Brennstoffes mit mageren Luft-Brennstoff-Verhältnissen bewirken kann, umfassend Mittel, welche in den Abgasen enthaltene NOₓ in Gegenwart eines Sauerstoffüberschusses absorbieren und die absorbierten NOₓ wieder freisetzen, wenn die Sauerstoffkonzentration der Abgase sich verringert, **dadurch gekennzeichnet, daß** die Mittel zur Absorption von NOₓ eine Kombination aus:
- einer ersten Zusammensetzung, die einen Träger und eine aktive Phase umfaßt, wobei die aktive Phase auf der Grundlage von Mangan und mindestens eines weiteren Elements A ausgewählt aus Alkali- und Erdalkali-Metallen, wobei Mangan und das Element A chemisch gebunden sind, beruht,
- einer von der ersten Zusammensetzung verschiedenen zweiten Zusammensetzung, die einen Träger und eine aktive Phase auf der Grundlage von Mangan und mindestens eines weiteren Elements B ausgewählt aus Alkali-, Erdalkali- und Seltenen Erd-Metallen, umfaßt, wobei diese zweite Zusammensetzung eine spezifische Oberfläche nach dem Calcinieren während 8 Stunden bei 800°C von mindestens 80 m²/g aufweist oder aufzuweisen in der Lage ist, und
- einer dritten, in die Mittel zur Absorption von NOₓ eingearbeiteten Reduktions- und/oder Dreiwege-Katalysator-Zusammensetzung, welche dritte Zusammensetzung von der ersten und der zweiten Zusammensetzung verschieden ist, umfaßt.

2. Zusammensetzung nach Anspruch 1, **dadurch gekennzeichnet, daß** die zweite Zusammensetzung nach der Calcinierung während 8 Stunden bei 800°C eine spezifische Oberfläche von mindestens 100 m²/g aufweist oder aufzuweisen in der Lage ist.

3. Zusammensetzung nach einem der Ansprüche 1 und 2, **dadurch gekennzeichnet, daß** die Elemente A und B aus Kalium, Natrium und Barium ausgewählt sind.

4. Zusammensetzung nach einem der Ansprüche 1 bis 3, **dadurch gekennzeichnet, daß** der Träger der zweiten Zusammensetzung auf Aluminiumoxid oder mit Silizium stabilisiertem Aluminiumoxid, Zirconium, Barium oder einem seltenen Erdelement beruht.

5. Zusammensetzung nach einem der Ansprüche 1 bis 3, **dadurch gekennzeichnet, daß** der Träger der zweiten Zusammensetzung auf der Grundlage von Siliciumdioxid beruht.

6. Zusammensetzung nach einem der Ansprüche 1 bis 3, **dadurch gekennzeichnet, daß** der Träger der zweiten Zusammensetzung auf der Grundlage von Siliciumdioxid und Titanoxid in einem Ti/Ti+Si-Atomverhältnis zwischen 0,1 und 15% beruht.

7. Zusammensetzung nach einem der Ansprüche 1 bis 3, **dadurch gekennzeichnet, daß** der Träger der zweiten Zusammensetzung auf der Grundlage von Ceroxid und Zirconiumoxid beruht, wobei dieser Träger mit Hilfe eines Verfahrens erhalten worden ist, gemäß dem man eine Mischung aus Zirconiumoxid und Ceroxid bildet und die in dieser Weise gebildete Mischung mit einer alkoxylierten Verbindung, die eine Kohlenstoffzahl von mehr als 2 aufweist, wäscht oder imprägniert.

8. Zusammensetzung nach einem der Ansprüche 1 bis 3, **dadurch gekennzeichnet, daß** der Träger der zweiten Zusammensetzung auf der Grundlage von Ceroxid und Zirconiumoxid beruht, wobei dieser Träger mit Hilfe eines Verfahrens erhalten worden ist, gemäß dem man eine Lösung eines Cersalzes, eine Lösung eines Zirconiumsalzes und einen Hilfsstoff, ausgewählt aus anionischen oberflächenaktiven Mitteln, nichtionischen oberflächenaktiven Mitteln, Polyethylenglykolen, Carbonsäuren und deren Salzen, umsetzt, wobei die Reaktion gegebenenfalls in Gegenwart einer Base und/oder eines Oxidationsmittels durchgeführt werden kann.

9. Zusammensetzung nach einem der vorhergehenden Ansprüche, **dadurch gekennzeichnet, daß** der Träger der ersten Zusammensetzung auf der Grundlage eines Oxids, ausgewählt aus Ceroxid, Zirconiumoxid oder Mischungen davon, beruht.

10. Zusammensetzung nach einem der vorhergehenden Ansprüche, **dadurch gekennzeichnet, daß** der Träger der ersten Zusammensetzung auf der Grundlage von Ceroxid beruht und zusätzlich Siliciumdioxid enthält.

11. Zusammensetzung nach einem der Ansprüche 1 bis 10, **dadurch gekennzeichnet, daß** die dritte Reduktions- und/oder Dreiwege-Katalysator-Zusammensetzung in ein und derselben katalytischen Formulierung in die Zusammensetzung zur Absorption von NOₓ eingearbeitet ist.

12. Zusammensetzung nach einem der Ansprüche 1 bis 10, **dadurch gekennzeichnet, daß** die dritte Reduktions- und/oder Dreiwege-Katalysator-Zusammensetzung in Form von verschiedenen katalytischen Formulierungen, die auf dem gleichen Substrat abgeschieden sind, in die Zusammensetzung zur Absorption der NOₓ eingearbeitet ist.

13. Zusammensetzung nach einem der Ansprüche 1 bis 12, **dadurch gekennzeichnet, daß** die dritte Reduktions- und/oder Dreiwege-Katalysator-Zusammensetzung auf ein und dem selben Katalysator folgendes umfaßt:
- ein oder mehrere Pt-, Pd-, Rh-Edelmetalle,
- hitzebeständige Oxidträger, vorzugsweise Al₂O₃, welche gegebenenfalls mit Erdalkalimetallelementen, vorzugsweise Ba, Sr, oder seltenen Erdelementoxiden, dotiert sind, und/oder vorgebildete Oxide des Typs CeO₂, ZrO₂ oder Ce-Zr, die vorzugsweise dotiert sein können mit Oxiden von Seltenen Erdelementen und/oder von Yttrium und/oder Sauerstoffspeicheroxiden, vorzugsweise ZrO₂, CeO₂ oder vorgebildeten Oxiden des Typs Ce-Zr, die vorzugsweise mit Oxiden der Seltenen Erdelemente und/oder von Yttrium und/oder H₂S-bindenden Elementen der Elemente oder Oxide von Ni, Mn, Cu dotiert sein können.

14. Zusammensetzung nach einem der Ansprüche 1 bis 13, **dadurch gekennzeichnet, daß** die dritte Reduktions- und/oder Dreiwege-Katalysator-Zusammensetzung TWC in Form einer Monoschicht oder in Form einer Mehrfachschicht aus einem Substrat abgeschieden ist, während das NOₓ absorbierende Produkt in Form einer Monoschicht oder in Form einer Mehrfachschicht auf diesem gleichen Substrat oder in Kombination mit der dritten Reduktions- und/oder Dreiwege-Katalysator-Zusammensetzung kombiniert und dann auf dem Substrat abgeschieden ist.

15. Zusammensetzung nach einem der Ansprüche 1 bis 13, **dadurch gekennzeichnet, daß** die dritte Reduktions- und/oder Dreiwege-Katalysator-Zusammensetzung und das NOₓ absorbierende Produkt eine Kombination vom Sandwich-Typ bilden durch Abscheidung auf getrennte Träger und Vereinigen der genannten Träger durch Übereinanderschichten.

16. Zusammensetzung nach einem der Ansprüche 1 bis 13, **dadurch gekennzeichnet, daß** die dritte Reduktions- und/oder Dreiwege-Katalysator-Zusammensetzung und jede der NOₓ absorbierenden Zusammensetzungen eine Kombination bilden.

17. Zusammensetzung nach Anspruch 16, **dadurch gekennzeichnet, daß** die beiden Kombinationen auf dem gleichen Substrat abgeschieden sind.

18. Zusammensetzung nach Anspruch 16, **dadurch gekennzeichnet, daß** jede der Kombinationen auf einem getrennten Substrat abgeschieden ist und die beiden Substrate anschließend nebeneinander angeordnet werden.

## Claims

1. Composition for purifying the exhaust gases of an internal combustion engine that can achieve combustion of a fuel with lean air-fuel ratios comprising means absorbing the NOₓ present in the exhaust gases, in the presence of an excess of oxygen and which release the NOₓ absorbed when the oxygen concentration in the exhaust gases falls,
**characterized in that** the means absorbing the NOₓ comprise an association:
- between a first composition comprising a support and an active phase, the active phase being based on manganese and at least one other element A chosen from among the alkali metals and alkaline earths, manganese and the element A being chemically bound,
- between a second composition distinct from the first composition comprising a support and an active phase based on manganese and at least one other element B chosen from among the alkali metals, the alkaline earths and the rare earths, this second composition having, or being able to have, a specific surface area of at least 80 m²/g after calcination for 8 hours at 800°C, and a third reducing and/or three-way catalytic composition is incorporated in the means absorbing NOₓ, this third composition being distinct from the first and second compositions.

2. Composition according to claim 1, **characterized in that** the second composition has, or is able to have, a specific surface area of at least 100 m²/g after calcination for 8 hours at 800°C.

3. Composition according to either of claims 1 and 2, **characterized in that** the elements A and B are chosen from among potassium, sodium and barium.

4. Composition according to one of claims 1 to 3, **characterized in that** the support for the second composition is based on alumina or alumina stabilized by silicon, zirconium, barium or a rare earth.

5. Composition according to any one or claims 1 to 3, **characterized in that** the support for the second composition is based on silica.

6. Composition according to any one of claims 1 to 3, **characterized in that** the support for the second composition is based on silica and titanium oxide in an atomic proportion Ti/Ti+Si of between 0.1 and 15 %.

7. Composition according to any one of claims 1 to 3, **characterised in that** the support for the second composition is based on cerium oxide and zirconium oxide, this support having been obtained by a method in which a mixture is formed comprising zirconium oxide and cerium oxide and the mixture formed in this way is washed or impregnated with an alkoxylated compound having a number of carbon atoms above 2.

8. Composition according to any one of claims 1 to 3, **characterised in that** the support for the second composition is based on cerium oxide and zirconium oxide, this support having been obtained by a method in which a solution of a cerium salt is reacted with a solution of a zirconium salt and an additive chosen from anionic surfactants, non-ionic surfactants, polyethylene glycols, carboxylic acids and their salts, it being possible for the reaction to take place optionally in the presence of a base and/or oxidising agent.

9. Composition according to any one of the preceding claims, **characterised in that** the support for the first composition is based on an oxide chosen from among cerium oxide, zirconium oxide, or mixtures thereof.

10. Composition according to any one of the preceding claims, **characterised in that** the support for the first composition is based on cerium oxide and additionally includes silica.

11. Composition according to one of claims 1 to 10, **characterized in that** the third reducing and/or three-way catalytic composition is incorporated in the composition absorbing NOₓ in the same catalytic formulation.

12. Composition according to one of claims 1 to 10, **characterized in that** the third reducing and/or three-way catalytic composition is incorporated in the composition absorbing NOₓ in different catalytic formulations deposited on the same substrate.

13. Composition according to one of claims 1 to 12, **characterized in that** the third reducing and/or three-way catalytic composition comprises on the same catalyst:
- one or more precious metals Pt, Pd, Rh,
- supports, refractory oxides, preferably Al₂O₃ doped or not with alkaline earth elements, preferably Ba, Sr or oxides of rare earths, and/or preformed oxides of the type CeO₂, ZrO₂ or preformed oxides of Ce-Zr that can be doped preferably with oxides of rare earths and/or of yttrium and/or oxygen-storing oxides preferably ZrO₂, CeO₂ or preformed oxides of Ce-Zr that can be doped preferably by oxides of rare earths and/or of yttrium, and/or H₂S-fixing elements among the elements Ni, Mn, Cu or their oxides.

14. Composition according to any one of claims 1 to 13, **characterized in that** the third reducing and/or three-way catalytic composition TWC is deposited in the form of a monolayer or in the form of a multilayer on a substrate, while the NOₓ-trapping product is deposited in the form of a monolayer or in the form of a multilayer on this same substrate or indeed combined with the third reducing and/or three-way catalytic composition and then deposited on the said substrate.

15. Composition according to any one of claims 1 to 13, **characterized in that** the third reducing and/or three-way catalytic composition and the NOₓ-trapping product form a combination of the sandwich type by deposition on separate supports and by assembling the said supports by superposition.

16. Composition according to one of claims 1 to 13, **characterized in that** the third reducing and/or three-way catalytic composition and each of the NOₓ-trapping compositions form a combination.

17. Composition according to claim 16, **characterized in that** the two combinations are deposited on the same substrate.

18. Composition according to claim 16, **characterized in that** each combination is deposited on a separate substrate, the two substrates being then juxtaposed.
